# EUROPEAN PATENT APPLICATION

(11) **EP 4 621 373 A1**
(43) Date of publication of application: **24.09.2025**
(21) Application number: 24164288.3
(22) Date of filing: 18.03.2024
(51) Int. Cl.: G01M 5/00, F03D 7/04, F03D 17/00

(54) **A COMPUTER IMPLEMENTED METHOD, A COMPUTER PROGRAM PRODUCT, A SENSOR NODE, A SENSOR DEVICE, AND A SYSTEM FOR MONITORING AIRFOIL(S)**

(71) Applicant: RTDT Laboratories AG, 8093 Zürich ETH-Hönggerberg (CH)
(72) Inventor: ABDALLAH, Imad, 4054 Basel (CH); BARBER, Sarah, 8640 Rapperswil (CH); DEPARDAY, Julien, 8640 Rapperswil (CH); POLONELLI, Tommaso, 8092 Zürich (CH); DUTHÉ, Gregory, 8093 Zürich (CH); CLARK, Thomas, Cambridge CB3 0GT (GB); MARYKOVSKIY, Yuriy, 8640 Rapperswil (CH)
(74) Representative: Rentsch Partner AG

(57) **Abstract**

A computer implemented method, a computer program product, a sensor node, a sensor device (x1), and a system (x300) for monitoring, diagnostics and/or prognostics of one or more airfoils (x100, 202), in particular wind turbine blades (x202), airplane wings and other airfoil-like structures. The method comprises a computing device (x56, 70) receiving sensor signals - from one or more sensor devices (x1), which include one or more sensor nodes (x10) arranged on the one or more airfoils (x100, 202) - and processing the sensor signals for monitoring the one or more airfoils (x100, 202). The sensor signals received by the computing device (x56, 70) comprise a strain signal, a vibration signal, an acoustic signal, and an aerodynamic pressure signal.

## Description

### FIELD OF THE DISCLOSURE

The present disclosure relates to a computer implemented method, a computer program product, a sensor node, a sensor device, and a system for monitoring of one or more airfoils, in particular wind turbine blade(s), airplane wings and other aeroelastic-like structures.

### BACKGROUND OF THE DISCLOSURE

Supervisory Control and Data Acquisition (SCADA) systems are designed and developed in a wide range of industrial control systems and the Industrial Internet of Things (lloT). However, they are only minimally present in the aero-structural sector, in particular airfoils, such as wind turbine blades or airplane wings, and they are not acquiring data from the blades but rather from statics parts. This is due to the challenging task of acquiring aerodynamic and aeroacoustic signal from airfoils, such as blades of a hundreds meters' tall wind turbine. In practice, this usually implies considerable effort and cost in measurement campaigns. Recently, some approaches have been proposed to acquire data from airfoils showing the importance of such measurements. For instance, in M. Mieloszyk and W. Ostachowicz, "An application of structural health monitoring system based on fbg sensors to offshore wind turbine support structure model," Marine Structures, vol. 51, pp. 65-86, 2017, the authors manufactured an entire custom blade, with an embedded Pitot tube and acoustic sensors, to measure airstream and turbulences impacting the rotor blade. Alternatively, as described in R. Fischer, H. Mueller, T. Polonelli et al., "Windnode: A long-lasting and long-range bluetooth wireless sensor node for pressure and acoustic monitoring on wind turbines," in 2021 4th IEEE International Conference on Industrial Cyber-Physical Systems (ICPS). IEEE, 2021, pp. 393-399, such expensive and wired SCADA systems are replaced with scalable and low-power IIoT sensors for the next generation of monitoring systems, characterized by a limited installation cost.

Although, as described in J. Maldonado-Correa, S. Martin-Martinez, E. Artigao et al., "Using scada data for wind turbine condition monitoring: A systematic literature review," Energies, vol. 13, no. 12, p. 3132, 2020, certain known SCADA solutions are moving to the IloT field for both the Structural Health Monitoring (SHM) and aerodynamic airfoil monitoring, today, they are still bulky, expensive, and require to be powered externally (e.g. by the wind turbine itself), which often makes this deployment impossible. Certain known systems are represented by small size, battery operated loT nodes connected to the cloud with a wireless interface. However, when a small form factor and long battery lifetime are required, known systems still face unsolved design challenges to be addressed. Some of those are the energy consumption in active and sleep mode, the communication power, range and bandwidth - all critical parameters in this application scenario due to the size of the turbine and the number of deployed sensors. Thus, it is crucial to design energy-efficient and reliable devices able to acquire, process and transmit data for several years and, eventually, for the full airfoil lifetime.

T. Polonelli, H. Müller, W. Kong, R. Fischer, L. Benini and M. Magno, "Aerosense: A Self-Sustainable and Long-Range Bluetooth Wireless Sensor Node for Aerodynamic and Aeroacoustic Monitoring on Wind turbines," in IEEE Sensors Journal, vol. 23, no. 1, pp. 715-723, 1 Jan.1, 2023, doi: 10.1109/JSEN.2022.3224307 discloses a self-sustaining monitoring system for studying the aerodynamics of wind turbines with multi Micro- ElectroMechanical Systems (MEMS) sensors for SCADA devices. The system described therein features arrays of pressure and acoustic MEMS sensors and an Inertial measurement unit (IMU) coupled with edge computing solutions and photovoltaic energy harvesting to achieve in-field precise and sustainable data collection.

However, there is yet an unmet need for a method, a computer program product, a sensor node, a sensor device, and a system for a holistic monitoring of airfoils, blades and wings.

### SUMMARY OF THE DISCLOSURE

It is an objective of this disclosure to provide a computer implemented method, a computer program product, a sensor node, a sensor device, and a system for monitoring of one or more airfoils, which do not have at least some of the limitations, shortcomings and/or disadvantages of the prior art.

According to the present disclosure, these objectives are addressed by the features of the independent claims. In addition, further advantageous embodiments follow from the dependent claims and the description, whereby one or more embodiments of the computer implemented method, computer program product, sensor node, sensor device, and system are further configured for diagnostics and/or prognostics of the one or more airfoils.

In particular, according to the present disclosure, these objectives are addressed by a computer-implemented method for monitoring of one or more airfoils. An airfoil may be understood as a surface designed to produce lift when air flows around it, typically found on aircraft wings, propeller blades, turbine blades or the like. The method comprises a computing device receiving sensor signals - from one or more sensor devices, which include one or more sensor nodes arranged on the one or more airfoils - and processing the sensor signals for monitoring the one or more airfoils.

The sensor signals received by the computing device comprise a strain signal, a vibration signal, an acoustic signal, and an aerodynamic pressure signal.

The strain signal is indicative of a strain acting on the one or more airfoils. In the context of the present disclosure, the strain signal is representative of the mechanical strain experienced by the one or more airfoils due to external forces such as aerodynamic loads, gravitational forces, inertial forces or thermal expansion.

The vibration signal is indicative of a vibration within the one or more airfoils, caused by the mechanical operation of the airfoil in the system it is integrated into (e.g. airplane, wind turbine) and or due to an impact with a foreign element and or vibrations caused by exposure to the atmospheric conditions, such as winds, in particular wind turbulence or gusts or operational (control) conditions, such as large deflections due to an sudden stop of a wind turbine. Two vibration signals, one on the pressure side and one on the suction side of the airfoil, can be used to infer an elastic deformation (displacement) of the airfoil structure under external forces, from which internal forces can be estimated, and inference on crack propagation in a composite structure can be assessed when combined with physics-based models, such Finite Element Model of the airfoil structural section.

The acoustic signal is indicative of acoustic emission and/or transmission around and/or on outer surface(s) of the one or more airfoils. According to embodiments, the acoustic signal is indicative of either one or both of two types of acoustic signals: surface acoustic wave, traveling along the surface of a material exhibiting elasticity, and sound waves that travel through a medium, such as air in the case of a wind turbine blade airfoil section.

According to embodiments, the acoustic signals are characterized by their frequency, amplitude, and wavelength.

The aerodynamic pressure signal is indicative of an aerodynamic pressure around the one or more airfoils. According to embodiments disclosed herein, the aerodynamic pressure signal is indicative of an absolute atmospheric pressure around the one or more airfoils. Alternatively, or additionally, the aerodynamic pressure signal is indicative of differential pressure(s) between various locations of the one or more airfoils.

According to an embodiment, processing the sensor signals for monitoring the one or more airfoils comprises detecting, classifying and/or localizing biological and/or non-biological impacts with the one or more airfoils. Detecting, classifying and/or localizing biological and/or non-biological impacts with the one or more airfoils is performed by comparison of the strain signal, vibration signal, acoustic signal and/or aerodynamic pressure signal(s) with a set of signal patterns characteristic to biological respectively non-biological impacts and collisions with the one or more airfoils. In particular, the set of signal patterns characteristic to biological respectively non-biological impacts and collisions are recorded, labelled and stored in a database in a learning/training process.

Specifically, according to embodiments, detecting, classifying and/or localizing biological and/or non-biological impacts with the one or more airfoils comprises determining a rate of signal decay and/or energy content of the sensor signals. In particular, determining a rate of signal decay and/or energy content of the sensor signals is achieved by characterizing the strain signal, vibration signal, acoustic signal and/or aerodynamic pressure signal in the time and/or frequency domains. Having determined a rate of signal decay and/or energy content of the sensor signals, biological and/or non-biological impacts are detected, classified and/or localized based on the rate of decay and/or energy content of the sensor signals.

According to embodiments, processing the sensor signals for monitoring the one or more airfoils comprises inferring surface (e.g. surface erosion) and/or structural damage (e.g. crack) of the one or more airfoils. Specifically, according to embodiment, deviation(s) of aerodynamic pressure (ΔCₚ) - within the aerodynamic pressure signal - from a baseline aerodynamic pressure are detected.

For example, a baseline aerodynamic pressure is recorded over a period of time (e.g. a year to capture seasonal variations). Thereafter, the received current aerodynamic pressure (ΔCₚ) - within the aerodynamic pressure signal - is compared with the prerecorded baseline aerodynamic pressure and determined whether the deviation matches a normal, expected deviation (such a gradual, slow deviation due to environmental changes) or whether the deviation is not expected (such as a sudden, fast deviation uncharacteristic of a change in environmental conditions, i.e. indicative of an impact or damage or irreversible deterioration).

In a further step, variation(s) of vibrations of the one or more airfoils are inferred from the detected deviation(s) of aerodynamic pressure (ΔCₚ). Using the inferred variation(s) of vibrations, changes in stiffness (ΔK) and/or structural damping (ΔC) of the one or more airfoils is/are inferred. As a next step, structural damage(s) of the one or more airfoils are detected, classified and/or localized based on the inferred changes in stiffness (ΔK) and/or structural damping (ΔC) of the one or more airfoils.

According to embodiments, detecting, classifying and/or localizing biological and/or non-biological impacts with the one or more airfoils comprises fusing of the sensor signals with a physics-based model of the blade, such as a Finite Element Model (FEM).

According to embodiments, processing the sensor signals for monitoring the one or more airfoils comprises inferring an aerodynamic load pattern/distribution on the one or more airfoils. Specifically, in a first step of inferring an aerodynamic load pattern/distribution on the one or more airfoils, a motion (position, orientation, deflection, deformation) of the one or more airfoils is characterized using the vibration signal. Thereafter, the one or more airfoils local inflow conditions such as local angle of attack, relative wind speed & local inflow turbulence are inferred. As a next step, a flow field around the one or more airfoils is reconstructed using the aerodynamic pressure signal and characterization of the motion (position, orientation, deflection, deformation) of the one or more airfoils. For example, the aerodynamic pressure data measured on the surface of the airfoil is propagated using a graph- or mesh-based numerical model (e.g. a Graph Neural Network model) to estimate the flow field around the airfoil geometry. Finally, the aerodynamic load pattern/distribution on the one or more airfoils is inferred using the reconstructed flow field around the one or more airfoils and/or inferred local inflow field conditions.

According to embodiments, inferring the aerodynamic load pattern/distribution on the one or more airfoils further comprises refining the reconstructed flow field by analyzing the acoustic signal in view of a spectral signature of the one or more airfoils. Specifically, for a given airfoil geometry, wind speed, angle of attack and airfoil position, the acoustic signal has a very specific spectral signature that can be used to adjust, correct, fine tune and calibrate the estimated flow field from the previous step.

A particular implementation of the computer implemented method, computer program product, sensor node, sensor device, respectively system for monitoring relates to airfoil(s) comprised by one or more of a plurality of wind turbine blades of one or more wind turbines, the plurality of wind turbine blades rotating around respective wind turbine axis(s) of the one or more wind turbines. Specifically, in a first step of the computer implemented method for monitoring of one or more of a plurality of wind turbine blades, the sensor signals from each sensor node are sampled at a sampling rate to determine sectional aerodynamic pressure distributions, sectional acoustic and sectional vibrational data (including position,orientation and/or displacement) corresponding to different azimuthal positions of the wind turbine blade(s). According to embodiments, the azimuthal positions of the wind turbine blade(s) are determined based on the vibrational data. In particular, the azimuthal positions of the wind turbine blade(s) are determined based on multiple signals comprised by the vibrational data including: 3-axis acceleration signals, 3-axis gyroscope signals and 3-axis magnetometers signals. The position and the orientation of the wind turbine blade section are computed using a combination of the accelerometer, gyroscope, and magnetometer signals.

Thereafter, one or more angle(s) of attack, relative wind speed(s) and/or local turbulence intensity(s) are computed from the sectional aerodynamic pressure distributions, sectional acoustic and sectional vibrational data. In particular, the one or more angle(s) of attack, relative wind speed(s) and/or local turbulence intensity(s) are computed at a predefined number of azimuthal positions of the wind turbine blade(s).

According to embodiments of monitoring of one or more of a plurality of wind turbine blades, the angle(s) of attack, relative wind speed(s) and/or local turbulence intensity(s) from each sensor node are fused for one or more rotations of the wind turbine blade(s). Full rotor field wind speed(s), wind direction(s), turbulence intensity(s), wind veer(s), and/or wind shear(s) acting on the one or more wind turbines are then inferred based on the fused angle(s) of attack, relative wind speed(s) and/or local turbulence intensity(s) at each airfoil(s) section.

According to embodiments, a wind farm comprising a number N (greater than or equal to 2) of wind turbines is monitored. The plurality of wind turbines comprise a total number of K (greater than or equal to 2) wind turbine blades. A total number M of sensor nodes are distributed on the wind turbine blades.

For example, for a wind farm having a number N = 5 wind turbines, each having a number L = 3 wind turbine blades, each wind turbine blade being fitted with a number of J = 2 sensor nodes, N = 5, K = 5 * 3= 15 and M = 5 * 3 * 2 = 30. While this example assumes wind turbines having an identical number of blades and an identical number of sensor nodes being installed on each blade, it shall be appreciated that different non-identical distributions of the sensor nodes are within the scope of the present method.

According to embodiments of the method for monitoring of a plurality of wind turbine blades of a wind farm, receiving the sensor signals comprises receiving the sensor signals from a number M of sensor devices associated with a number N of wind turbines, a number M equal to or greater than N - of the M sensor devices - being attached to one or more airfoils sections comprised by a number K of wind turbine blades of the N wind turbines, the wind turbine blades rotating around wind turbine axes. Correspondingly, inferring a full field wind speed, wind direction, turbulence intensity, wind veer, and/or wind shear comprises inferring a number N of freestream or wake affected full field wind speeds, wind directions, turbulence intensities, wind veers, and/or wind shears for each of the number N of wind turbines. The method for monitoring of a plurality of wind turbine blades of a wind farm further comprises determining control setting(s) for operating one or more of the number N of wind turbines - such as pitch control/rotor speed control/torque control/power control/yaw control and/or wake steering- based on the number N of full field wind speeds, wind directions, turbulence intensities, wind veers, and/or wind shears such as to optimize operation of the number N of wind turbines. According to embodiments, determining control setting(s) for operating one or more of the number N of wind turbines comprises determining control setting(s) for maximizing an overall power production of the number N of wind turbines, and/or optimizing a life-cycle management of structural components of the number N of wind turbines.

According to an embodiment, the control setting(s) for operating one or more of the number N of wind turbines is/are determined such as to adjust the yaw position of a nacelle in order to maximize power production while minimizing the loads on a wind turbine tower and/or rotor loads. Furthermore, the control setting(s) may be determined such as to enable actively adjusting individual pitch positions of each wind turbine blade depending on inferred turbulence intensity, wind veer and/or wind shear to primarily reduce structural fatigue and extreme loads.

According to embodiments, the method for monitoring of a plurality of wind turbine blades comprises determining control setting(s) for operating one or more of the number N of wind turbines such as to limit the aerodynamic load - as determined according to the method of monitoring of an airfoil of the present disclosure - on one or more of the airfoils. Alternatively, or additionally the method for monitoring of a plurality of wind turbine blades comprises determining control setting(s) for operating one or more of the number N of wind turbines such as to limit negative effect(s) of the wind speed(s), wind direction(s), turbulence intensity(s), wind veer(s), and/or wind shear(s) acting on one or more of the airfoils. Alternatively, or additionally the method for monitoring of a plurality of wind turbine blades comprises determining control setting(s) for operating one or more of the number N of wind turbines such as to maximize their electrical power production from the wind speed(s), wind direction(s), turbulence intensity(s), wind veer(s), and/or wind shear(s) acting on one or more of the airfoils.

According to embodiments, processing the sensor signals for monitoring of the one or more airfoils comprises determining an unsteady aerodynamic pressure around the airfoil using the aerodynamic pressure signal and determining a vibrational mode frequency from the vibration signal. For example, unsteady aerodynamic pressure is detected around the airfoil via logarithmic decrement of the aerodynamic pressure signal. Thereafter, bending-torsion flutter airfoil instability(s) is detected by monitoring of an interaction between the unsteady aerodynamic pressure and the blade vibrational mode frequency.

According to embodiments, processing the sensor signals for monitoring of the one or more airfoils comprises detecting oscillation(s) and/or deviation(s) of the angle of attack of the one or more airfoils. Alternatively, or additionally, processing the sensor signals for monitoring of the one or more airfoils comprises detecting oscillatory instability(s) of the one or more airfoils by detecting continuous and/or intermittent small-amplitude oscillations in the vibration signal(s) and/or strain signal(s).

According to embodiments, in order improve the specificity of the monitoring of the airfoils with respect to its geometry, airfoil geometry data indicative of a geometry of the one or more airfoils and sensor placement data indicative of sensing locations of the one or more sensor nodes relative to the geometry(s) of the one or more airfoils are received by the computing device. Correspondingly, the sensor signals for monitoring of the one or more airfoils further comprises processing of the sensor signals using the airfoil geometry data and sensor placement data.

According to the present disclosure, the identified objective(s) are further addressed by a computer program product comprising computer-readable instructions which, when executed by a processor of a computing device, cause the computing device to carry out the method for monitoring of one or more airfoils according to any one of its embodiments disclosed herein.

Further disclosed herein are a computer-readable storage medium, in particular a non-transitory storage medium, a computer-readable data carrier, a computer-readable data carrier comprising computer-readable instructions which, when executed by a processor of a computing device, cause the computing device to carry out the method for monitoring of one or more airfoils according to any one of its embodiments disclosed herein.

According to the present disclosure, the identified objective(s) are further addressed by a sensor device comprising one or more sensor nodes comprising a plurality of sensor elements. The sensor nodes are configured for attachment to one or more airfoils. Each sensor nodes comprises a housing, an energy storage device and/or energy capture device and one or more of the sensor elements. The housing of the sensor nodes has an airfoil attachment surface and an exposed surface. According to embodiments, the housing of the sensor nodes is (at least partially) flexible allowing a certain degree of deformation in particular of the airfoil attachment surface in order to facilitate a flush attachment of the sensor node onto a surface of the airfoil. According to embodiments, the airfoil attachment surface is provided with an adhesive for attachment to a surface of the airfoil. According to embodiments, the exposed surface is arranged opposite the airfoil attachment surface and is intended to be exposed to environmental influences, such as airflow, temperature, humidity, etc. also after the sensor node has been attached to the airfoil.

According to embodiments, the energy storage device comprises a battery of any suitable type, such as a lithium-ion battery, a nickel-metal hydride battery, a lead-acid battery, or any other type of battery known in the art. The battery serves as a source of electrical energy for the sensor node. According to a particular embodiment, the energy storage device comprises a foil-like battery. Battery layers are embedded and continuously distributed within the flexible housing. The design and arrangement of the battery layers are such that they take advantage of the maximal available volume of the housing. This maximizes the capacity of the battery, thereby enhancing the power supply for the autonomous operation of the sensor node. Foil-like batteries as energy storage device are particularly advantageous as they have a very low thickness, enabling the manufacture of sensor nodes of a thickness of only a few millimeters, which allows the provision of sensor nodes which - when arranged on an airfoil - have a small, even negligible effect on the aerodynamic characteristics of the airfoil.

Alternatively, or additionally, sensor node comprises an energy capture device such as a photovoltaic panel, arranged on the exposed surface of the housing and configured to convert solar energy into electricity to power the sensor node. Alternatively, or additionally, the energy capture device comprises a kinetic energy capture device for converting kinetic energy into electricity. The kinetic energy capture device can be based on various principles and mechanisms, depending on the specific application. For example, it could be a piezoelectric device that generates an electric charge in response to mechanical stress, or a flywheel-based devices that stores energy in a rotating mass.

The on-board processing device is configured to capture the sensor signals generated by the sensor elements. Furthermore, the on-board processing device is configured to control the data transmitter to transmit the sensor signals - to other sensor nodes of the sensor device and/or to a computing device, in particular a remote computing device, communicatively connected to the sensor device(s). According to embodiments, the on-board processing device comprises one or more of: Microcontrollers; Digital Signal Processors (DSPs); Field-Programmable Gate Arrays (FPGAs) and/ or Application-Specific Integrated Circuits (ASICs).

The data transmitter operates by converting the sensor signal into a radio frequency signal or Bluetooth or other, which is then broadcasted, e.g. through an antenna. The transmitted signal can be received by a compatible data receiver located within the range of the transmitter. According to embodiments, one or more of the data transmitters is a wireless transmitter, advantageous in particular for installations whereby the sensor nodes are moving with respect to each other, such as for exchanging data between sensor nodes arranged on different blades of a wind turbine. Wireless embodiments of the data transmitters can operate on various frequencies and standards, such as Bluetooth, in particular Bluetooth Low Energy (BLE), cellular networks, or other wireless communication protocols.

Alternatively, or additionally one or more of the data transmitters is/are wired transmitters, advantageous in particular for installations whereby the sensor nodes are stationary with respect to each other, such as for exchanging data between sensor nodes attached to the same blade of a wind turbine. Wired embodiments of the data transmitters can operate according to any type of wired connection capable of transmitting data, such as an Ethernet cable, a coaxial cable, a telephone line, a fiber optic cable, or the like.

Each sensor device comprises at least one of each of the following sensor elements:
- A strain sensor
   The strain sensor is configured to generate a strain signal indicative a strain acting on the one or more airfoils by capturing a strain acting on the attachment surface of the sensor node. According to a particular embodiment, the strain sensor comprises a piezoelectric ceramic strain sensor integrated into the housing;
- An inertial measurement unit (IMU)
   The inertial measurement unit is configured to generate a vibration signal indicative of a vibration within the one or more airfoils by capturing vibrations acting on the airfoil attachment surface.
- A microphone array
   The microphone array comprises a plurality of microphones arranged at a plurality of microphone locations spaced apart on the exposed surface of the housing and is configured to generate an acoustic signal indicative of acoustics around and/or on outer surface(s) of the one or more airfoils. Specifically, the acoustic signal comprises a plurality of audio and/or surface wave signals corresponding to the plurality of microphone locations.
- A pressure sensor array
   The pressure sensor array comprises a plurality of absolute pressure sensors and/or differential pressure sensors, configured to generate an aerodynamic pressure signal indicative of an aerodynamic pressure around the one or more airfoils. Specifically, the aerodynamic pressure signal comprises a plurality of pressure signals indicative of pressures at a plurality of pressure measurement locations arranged spaced apart on the exposed surface of the housing.
According to embodiments, the pressure sensor array comprises a plurality of absolute and/or differential sensors each fluidically connected to a reference opening and a measurement opening of the housing.

The plurality of sensor elements are comprised by the one or more sensor nodes, whereby each sensor node does not necessarily comprise one of each type of sensor elements, the one or more sensor nodes of the sensor device not having to be necessarily identical.

In order to make the sensor nodes autonomous, or semi-autonomous, according to embodiments, one or more of the data transmitters, one or more of the data transmitters and one or more of the on-board processing device(s) are comprised by the one or more sensor nodes. Alternatively, or additionally, one or more of the data transmitters, one or more of the data transmitters and one or more of the on-board processing device(s) are comprised by the sensor device but outside the sensor nodes, e.g. in a separate housing.

In order to conserve energy and to thereby increase operational autonomy of the sensor device, according to embodiments, the on-board processing devices of the one or more sensor nodes are configured to orchestrate operation of the plurality of sensor elements comprised by the one or more sensor nodes based on one or more of:
- An energy supply of the energy storage device and/or energy capture device of each sensor node. For example, the energy supply relates to a level of energy reserves of an energy storage device. Alternatively, or additionally, the energy supply relates to a current and/or expected level of energy supplied by the energy capture device, such as the current and/or expected level of energy supplied by a photovoltaic panel in view of current and/or expected light intensity.
- Operating state(s) of the one or more airfoils to which the sensor nodes are attached to. Operating state(s) of the one or more airfoils comprise states such as "stationary", "in motion", etc. For example sampling rate of the sensor elements may be decreased or even paused when the airfoil is in stationary and increased when the airfoil is in motion, or even adapted to the speed of motion of the one or more airfoils.
- Actual or forecasted environmental state in the vicinity of the one or more airfoils to which the sensor nodes are attached to. For example, sampling rate of the sensor elements may be decreased or even paused when the actual or forecasted environmental state in the vicinity of the one or more airfoils is stable respectively increased when the actual or forecasted environmental state is variable.
- The sensor signals generated by the plurality of sensor elements comprised by the one or more sensor nodes. For example, depending on the sensor signals of one or more of the sensor elements, sampling rate of other sensor elements may be decreased or even paused. Conversely, depending on the sensor signals of one or more of the sensor elements, sampling rate of other sensor elements may need to be increased or resumed (if paused).

In order to further optimize the energy consumption onboard the sensor node, data compression can be implemented on a need basis before transmission.

According to embodiments, the sensor device further comprises a relay hub comprising a hub data receiver and a hub data transmitter. The relay hub is in particular to be installed less exposed to the environmental elements as compared to the sensor nodes. For example, the relay hub is intended to be arranged in the nacelle, or tower of a wind turbine, whereby the sensor nodes are intended to be arranged on airfoils of the wind turbine blade(s). As a further example, the relay hub is intended to be arranged within the fuselage of an airplane, whereby the sensor nodes are intended to be arranged on the one or more airfoils of the airplane wing(s).

The hub data receiver of the relay hub is configured to receive the sensor signals from the data transmitters of the one or more of the sensor nodes. According to embodiments, the hub data receiver is a wireless transmitter, advantageous in particular for installations whereby the sensor nodes are moving with respect to the relay hub, such as for exchanging data between sensor nodes arranged on blades of a wind turbine an the relay hub. Wireless embodiments of the hub data receiver can operate on various frequencies and standards, such as Bluetooth, in particular Bluetooth Low Energy (BLE), cellular networks, or other wireless communication protocols. Alternatively, or additionally hub data receiver of the relay hub is a wired transmitter, advantageous in particular for installations whereby the sensor nodes are stationary with respect to the relay hub. Wired embodiments of the hub data receiver can operate according to any type of wired connection capable of transmitting data, such as an Ethernet cable, a coaxial cable, a telephone line, a fiber optic cable, or the like.

The transmitter of the relay hub is configured to transmit data representative of at least part of the sensor signals received from the sensor nodes. According to embodiments, the transmitter of the relay hub is a wired and/or wireless data transmitter, such as an Ethernet-based transmitters and/or WiFi-, Cellular- or Satellite-based transmitters or LoRA.

Wind energy contributes to climate-neutral energy production and thus mitigates global warming. The need to shift away from fossil energy sources has become ever more urgent. In the near future, wind energy must rise from today's 6% share of the global power mix to more than 30% by 2025 to achieve proximity to a pathway well below 2 C increase in global warming. To match the tremendous need for an efficiency increase in wind electricity generation, the energy harvested per square meter must be improved, or wind turbines should be installed on more sites. This requires a deeper understanding of the blade aerodynamics together with structural dynamics and a reduced environmental impact. As for sites selection, currently, the installation of wind turbines is constrained due to their noise emission and the subsequent complaints from nearby residents.

However, there is yet an unmet need for a method, a computer program product, a sensor node, a sensor device, and a system for a holistic monitoring of airfoils of one or more wind turbines. Hence it is a further objective of the present disclosure to provide a system for monitoring of airfoils of one or more wind turbines which do not have at least some of the limitations, shortcomings and/or disadvantages of the prior art.

This further objective is addressed according to the present disclosure by a system comprising one or more sensor devices according to one of the embodiments disclosed herein, each of the one or more sensor devices being associated with one or more wind turbines. The system further comprises a computing device, in particular a remote computing device, communicatively connected to the sensor device(s), the computing device being configured to carry out the method for monitoring of one or more airfoils according to one of the embodiments disclosed herein.

It is a further objective of the present disclosure to provide a sensor node for integration into an airfoil. The sensor node for integration into an airfoil comprises a plurality of sensor elements, an energy storage device and/or energy capture device, a data transmitter, and an on-board processing device.

The sensor node for integration into an airfoil comprises the following sensor elements:
- A strain sensor
   The strain sensor is configured to generate a strain signal indicative a strain acting on the strain sensor. According to a particular embodiment, the strain sensor comprises a piezoelectric ceramic strain sensor integrated into the housing;
- An inertial measurement unit (IMU)
   The inertial measurement unit is configured to generate a vibration signal indicative of a vibration within the sensor node.
- A microphone array
   The microphone array comprises a plurality of microphones configured to generate an acoustic signal indicative of acoustics around the microphones. Specifically, the acoustic signal comprises a plurality of audio and/or surface wave signals corresponding to the plurality of microphones.
- A pressure sensor array
   The pressure sensor array comprises a plurality of absolute pressure sensors and/or differential pressure sensors, configured to generate an aerodynamic pressure signal indicative of an aerodynamic pressure around the plurality of absolute pressure sensors and/or differential pressure sensors. According to embodiments, the pressure sensor array comprises a plurality of absolute and/or differential sensors fluidically connected to a reference opening and a measurement opening of the housing.

The present disclosure further relates to an airfoil comprising a sensor node according to one of the embodiments disclosed herein. The sensor node is integrated into the airfoil such that:
- the strain sensor is mechanically coupled with the airfoil to capture a strain acting on the one or more airfoils;
- the inertial measurement unit is mechanically coupled with the airfoil to capture a vibrations acting on the one or more airfoils;
- the plurality of microphones of the microphone array are arranged at a plurality of microphone locations spaced apart on an exposed surface of the airfoil; and
- the pressure sensors of the pressure sensor array are fluidically connected to a reference opening and a plurality of measurement openings spaced apart on the exposed surface of the airfoil.

Furthermore, the computer implemented method for monitoring of one or more airfoils according to embodiments of the present invention is applicable for the following non-exhaustive list of use cases:
- Bridges: in this use case, and especially for long-span bridges, one or more sensor nodes of the sensor device is/are installed on the bridge deck to monitor turbulent flow characteristics, aerodynamic loading and/or vibration response. This information can be used to better understand the aeroelastic stability margins and potential future design retrofits and improvements.
- Buildings: in this use case, one or more sensor nodes of the sensor device is/are installed on both an external facade and internal walls to measure and control aerodynamic loading, vibrational response, and/or flow inside the building, and heat flow inside the building.
- Ships and sailboats: in this use case, one or more sensor nodes of the sensor device is/are installed on a hull of the ship (and/or sail) for optimal navigational control.
- Airborne wind energy, UAV, Airplanes and sailplanes (gliders): in this use case, one or more sensor nodes of the sensor device is/are installed on one or multiple locations on wing(s) of the aircraft, for test and/or validation purposes of aerodynamic, vibration and/or acoustic responses, and/or for rapid numerical model tuning and/or performance optimization.
- Wind tunnels: in this use case one or more sensor nodes of the sensor device is/are installed on a measurement platform (airfoil section, or wing, or vehicle or bridge section) inside a wind tunnel to characterise aerodynamic properties (pressure coefficient, lift, etc.) of an instrumented object. Given how easy it is to mount and demount sensor nodes of the sensor device, it can be used for rapid prototyping and optimizations. This can result in significant time and cost savings in the wind tunnel.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The present disclosure will be explained in more detail, by way of example, with reference to the drawings which show:
- Figure 1: an airfoil, illustrating various terms used with respect to an airfoil and surrounding environment;
- Figure 2A: a highly schematic block diagram showing a top view of a sensor node according to the present disclosure;
- Figure 2B: a highly schematic block diagram showing a cross view of a sensor node according to the present disclosure;
- Figure 3A: a highly schematic perspective view illustrating the arrangement of absolute pressure sensors of a pressure sensor array of a sensor node according to the present disclosure;
- Figure 3B: a highly schematic cross-section illustrating the arrangement of absolute pressure sensors of a pressure sensor array of a sensor node according to the present disclosure;
- Figure 4A: a highly schematic perspective view illustrating the arrangement of differential pressure sensors of a pressure sensor array of a sensor node according to the present disclosure;
- Figure 4B: a highly schematic cross-section illustrating the arrangement of differential pressure sensors of a pressure sensor array a sensor node according to the present disclosure;
- Figure 5A: a highly schematic perspective view illustrating the arrangement of microphones of a microphone array of a sensor node according to the present disclosure;
- Figure 5B: a highly schematic cross-section illustrating the arrangement of microphones of a microphone array of a sensor node according to the present disclosure;
- Figure 6: a highly schematic perspective view of a strain sensor of a sensor node according to the present disclosure;
- Figure 7: a highly schematic block diagram of a first embodiment of a sensor device according to the present disclosure, the sensor device comprising a plurality of sensor nodes, whereby the sensor nodes share the same energy storage device, energy capture device, data transmitter and on-board processing device;
- Figure 8: a highly schematic block diagram of a further embodiment of a sensor device according to the present disclosure, the sensor device comprising a plurality of sensor nodes, each of the sensor nodes having an energy storage device, energy capture device, data transmitter and on-board processing device;
- Figure 9: a highly schematic block diagram of an even further embodiment of a sensor device according to the present disclosure, the sensor device comprising a plurality of sensor nodes, whereby the sensor device as well as the one or more of the sensor nodes comprise energy storage devices, energy capture devices, data transmitters and on-board processing device;
- Figure 10: a flowchart illustrating steps of a computer-implemented method for monitoring of one or more airfoils according to the present disclosure;
- Figure 11: a flowchart illustrating steps of processing the sensor signals for monitoring of the one or more airfoils;
- Figure 12: a flowchart illustrating steps of detecting, classifying and/or localizing biological and/or non-biological impacts with the one or more airfoils;
- Figure 13A: the theoretical basis for the concept of inferring surface and/or structural damage of airfoils based on
- Figure 13B: a flowchart illustrating steps inferring surface and/or structural damage of the airfoils from changes in the aerodynamic pressure;
- Figure 14A: a flowchart illustrating steps of inferring an aerodynamic load pattern/distribution on the one or more airfoils;
- Figure 14B: the theoretical basis of inferring an aerodynamic load pattern/distribution on the one or more airfoils;
- Figure 15: a flowchart illustrating steps of inferring aeroelastic instability phenomena;
- Figure 16: a schematic diagram of a system for monitoring of one or more airfoils of a wind turbine according to the present disclosure;
- Figure 17: a flowchart illustrating steps of processing the sensor signals for monitoring of wind turbine blades of a wind turbine;
- Figure 18: an illustration of full rotor inflow field reconstruction of a wind turbine;
- Figure 19: a schematic diagram of a system for monitoring of airfoils of a wind farm comprising a plurality of wind turbines according to the present disclosure; and
- Figure 20: a flowchart illustrating steps of determining control setting(s) for operating wind turbines of a wind farm.

### DETAILED DESCRIPTION OF THE EMBODIMENTS

It shall be noted that in the figures, identical or similar elements comprised in the plurality are labelled with the same reference numeral.

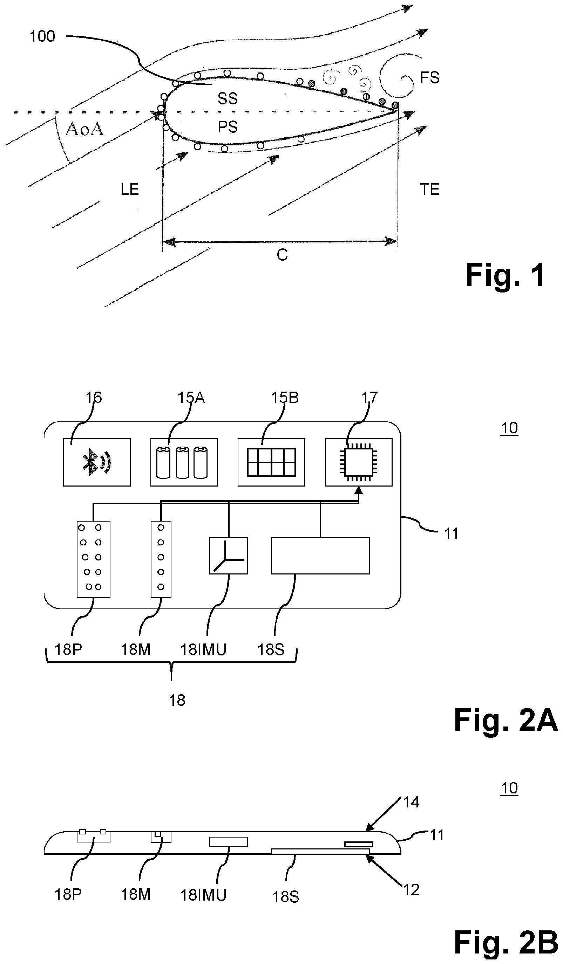

Various terms used with respect to an airfoil 100, 202 and surrounding environment shall be described with reference to figure 1. In general terms, an airfoil 100 is a surface designed to generating significantly more lift than drag when a fluid (in particular air) flows around it, typically found on aircraft wings, propeller blades, turbine blades or the like.

The leading edge LE of the airfoil 100 is the part that first contacts the air. Alternatively, the leading edge LE can be defined as the foremost edge of an airfoil 100. The trailing edge TE of an airfoil 100 is its rear edge, where the airflow separated by the leading edge LE meets. The straight line connecting the leading LE and trailing edges TE is referred to as the chord length, or simply chord C.

The suction surface (a.k.a. upper surface) SS of the airfoil 100 is generally associated with higher velocity and lower static pressure. The pressure surface (a.k.a. lower surface) PS of the airfoil 100 has a comparatively higher static pressure than the suction surface SS. The pressure gradient between these two surfaces contributes to the lift force generated for a given airfoil 100.

Another important parameter of an airfoil 100 is the Angle of Attack AoA, which affects the angle between the chord C and the flow direction of the fluid flow where the airfoil 100 is moving through the fluid. An ideal symmetric airfoil 100 does not generate any lift for AoA equal to zero; however, in the 0. 20 range, the pressure on the wind-facing surface (Pressure surface PS ) increases while it decreases on the suction surface SS, at the opposite edge. In this condition, the pressure distribution surrounding the airfoil 100 creates a lift force, pulling the airfoil 100 towards the suction surface SS. When the AoA increases too much, the fluid flow that normally moves over the suction surface SS generates a flow separation FS near the trailing edge TE, causing turbulence, audible noise and dramatically decreasing the lift effect.

Flow separation FS is defined as the detachment of a boundary layer from a surface into a wake. This phenomenon is typically observed when there is relative movement between a fluid and a solid surface, with viscous forces present in the layer of fluid close to the surface.

In the context of an airfoil 100, flow separation can occur when a boundary layer has travelled far enough in an adverse pressure gradient that the speed of the boundary layer relative to the surface (e.g. the suction surface SS) has stopped and reversed direction. This results in the flow becoming detached from the suction surface SS, taking the forms of turbulent eddies and vortices. Flow separation FS at an airfoil 100 can result in reduced lift and increased pressure drag, caused by the pressure differential between the front and rear surfaces of the object.

Turning now to figures 2A through 5B, various embodiments of sensor nodes 10 shall be described.

As shown on Figure 2A, the sensor nodes 10 comprise a housing 11, an energy storage device 15A, an energy capture device 15B and one or more of the sensor elements 18. According to a particular embodiment, the housing is 3D printed with a polyjet-printer, whereby a UV-curing resin is applied in layers with fine nozzles and cured. The advantages of this manufacturing technology are: different materials (different hardness and colours) can be printed in one part; flexible materials can be printed; and that very precise parts with smooth surfaces with adequate Shore A hardness level.

The energy storage device 15A comprises a battery of any suitable type, such as a lithium-ion battery, a nickel-metal hydride battery, a lead-acid battery, or any other type of battery known in the art. The battery serves as a source of electrical energy for the sensor node 10. Particular, the energy storage device 15A comprises a foil-like battery, whereby battery layers are embedded and continuously distributed within the housing 11. The design and arrangement of the battery layers are such that they take advantage of the maximal available volume of the housing 11. This maximizes the capacity of the battery, thereby enhancing the power supply for the autonomous operation of the sensor node. Foil-like batteries as energy storage device 15A are particularly advantageous as they have a very low thickness, enabling the manufacture of sensor nodes 10 of a thickness of only a few millimeters, which allows the provision of sensor nodes 10 which -when arranged on an airfoil 100, 202 - have a small, even negligible effect on the aerodynamic characteristics of the airfoil 100, 202.

Furthermore, the sensor node 10 comprises an energy capture device 15B, in particular a photovoltaic panel arranged on the exposed surface 14 of the housing 11 and configured to convert solar energy into electricity to power the sensor node.

Further comprised by embodiments of the sensor node 10 is an on-board processing device 17 configured to capture the sensor signals generated by the sensor elements 18. Furthermore, the on-board processing device 17 is configured to control a data transmitter 16 to transmit the sensor signals - to other sensor nodes 10 of a sensor device 1 and/or to a computing device 56, 70, in particular a remote computing device 70, communicatively connected to the sensor device(s) 1.

Further comprised by embodiments of the sensor node 10 is a data transmitter 16. According to an illustrated embodiment, the data transmitters 16 is a wireless transmitter, in particular a Bluetooth Low Energy (BLE) transmitter.

Embodiments of the sensor node 10 comprise one or more of the following sensor elements 18 - whereby a sensor device comprises each of the following sensor elements 18 (comprised by its one or more sensor nodes):
- A strain sensor 18S
- An inertial measurement unit 18IMU (IMU)
- A microphone array 18MA
- A pressure sensor array 18PA

As illustrated on Figure 2B, the sensor nodes 10 have an airfoil attachment surface 12 and an exposed surface 14 arranged opposite the airfoil attachment surface 12. According to embodiments, the housing 11 of the sensor nodes 10 is (at least partially) flexible allowing a certain degree of deformation in particular of the airfoil attachment surface 12 in order to facilitate a flush attachment of the sensor node onto a surface of the airfoil 100. The airfoil attachment surface 12 is provided with an adhesive for attachment to a surface of the airfoil 100.

The exposed surface 14, as its name suggests, is intended to be exposed to environmental influences, such as airflow, temperature, humidity, etc. also after the sensor node has been attached to the airfoil 100.

According to a particular embodiment, one inertial measurement unit 18IMU is provided, operating at 100Hz to 1 kHz, generating a vibration signal comprising 3-axis acceleration signals, 3-axis gyroscope signals and 3-axis magnetometers signals.

According to exemplary embodiments, the sensor nodes 100 are configured to be communicatively connectable such as to enable a plurality of sensor nodes 100 to be connected in series and arranged such as to fully or partially cover the surface of the airfoil 100.

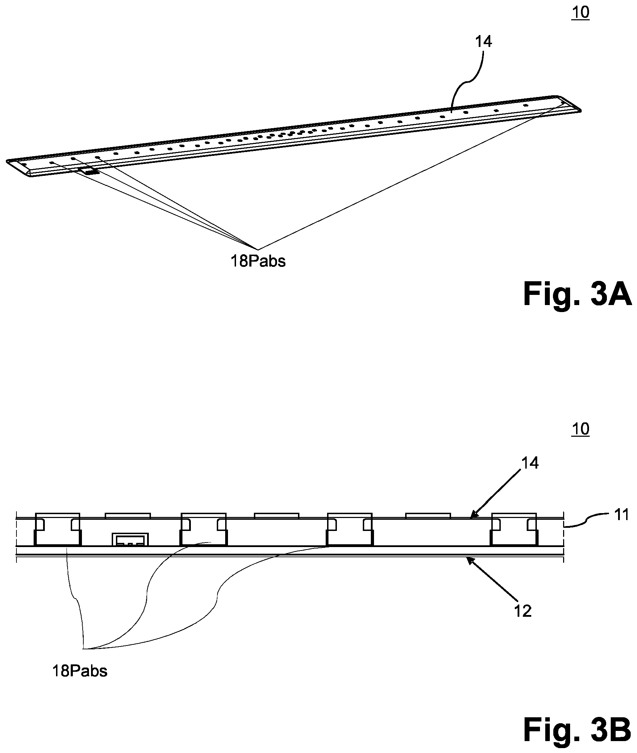

Figure 3A shows a highly schematic perspective view illustrating the arrangement of absolute pressure sensors 18Pabs of a pressure sensor array 18PA of a sensor node 10. As illustrated, the absolute pressure sensors 18Pabs are arranged at a plurality of pressure measurement locations arranged spaced apart on the exposed surface 14 of the housing 11. Correspondingly, the aerodynamic pressure signal comprises a plurality of pressure signals indicative of pressures at a plurality of pressure measurement locations.

According to a particular embodiment, 40 absolute pressure sensors are distributed across each sensor node 10.

As visible on the highly schematic cross-section of Figure 3B, through-holes in the exposed surface 14 (e.g. with a diameter of 1.7mm) are provided for the pressure sensors. Furthermore, to prevent uneven surfaces, pockets are provided for all electronic components.

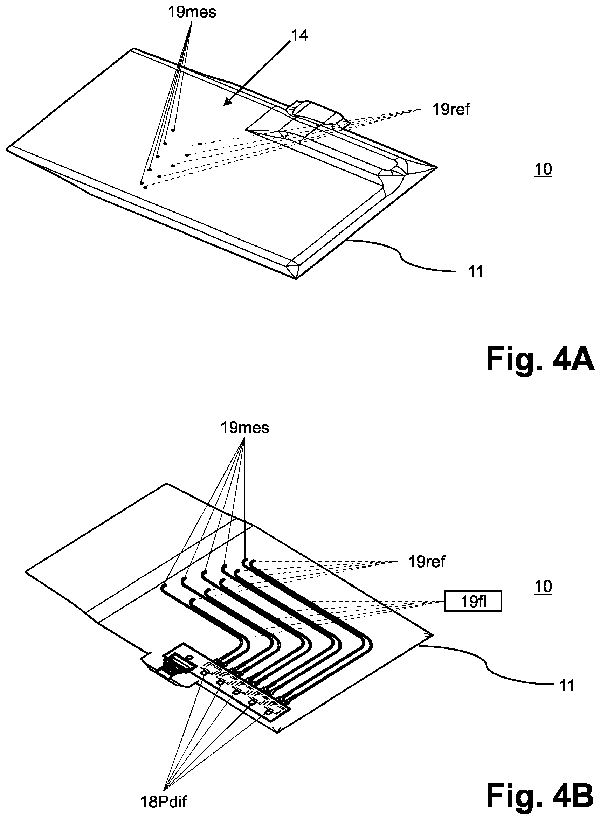

Figure 4A shows a highly schematic perspective view illustrating the arrangement of differential pressure sensors 18Pdif of the pressure sensor array 18PA of the sensor node 10. A plurality reference openings 19ref and corresponding plurality of measurement openings are provided on the exposed surface 14 of the housing 11.

As visible on figure 4B - showing a highly schematic cross-section illustrating the arrangement of differential pressure sensors 18Pdif - fluid connections 19fl (e.g. silicone tubes) are provided within the housing 11 to fluidically connect the differential pressure sensors 18Pdif to the reference openings 19ref and to measurement openings 19mes of the housing 11, the differential pressure sensors 18Pdif being arranged grouped together as a bank, at a location distant from the reference openings 19ref and measurement openings 19mes.

According to a particular embodiment, 5 differential pressure sensors 18Pdif are distributed across each sensor node 10 10.

In particular, the absolute pressure sensors 18Pabs and the differential pressure sensors 18Pdif are distributed on the exposed surface 14 of the sensor node 10 such that - when the sensor node 10 is attached to an airfoil 100 - absolute pressure sensors 18Pabs and differential pressure sensors 18Pdif are located on the leading edge LE of the airfoil 100, on both the suction surface SS and the pressure surface PS, as illustrated with hollow circles on figure 1.

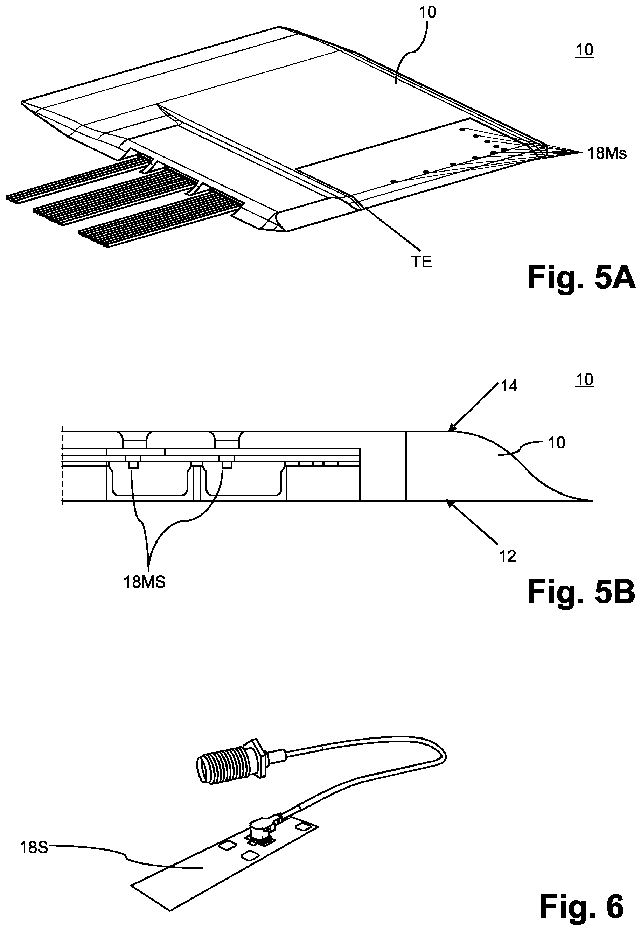

As shown on figures 5A and 5B, the microphone array 18PA of the sensor node 10 comprises a plurality of microphones 18Ms arranged at a plurality of microphone locations spaced apart on the exposed surface 14 of the housing 11. As illustrated on figure 5B, to prevent uneven surfaces, pockets are provided for the plurality of microphones 18Ms while holes (e.g. of a diameter of 1mm) are provided on the exposed surface 14 to expose the plurality of microphones 18Ms to the airflow around the airfoil 100.

The microphone array 18PA is configured to generate an acoustic signal indicative of acoustics around and/or on outer surface(s) of the airfoil 100. Specifically, the acoustic signal comprises a plurality of audio and/or surface wave signals corresponding to the plurality of microphone locations.

In particular, the microphone locations are distributed on the exposed surface 14 of the sensor node 10 such that - when the sensor node 10 is attached to an airfoil 100 - the plurality of microphones 18Ms are located at the trailing edge TE of the airfoil 100, as illustrated with solid grey-colored discs on figure 1.

Figure 6 shows a highly schematic perspective view of a strain sensor 18S of a sensor node 10, the strain sensor 18S comprising a piezoelectric ceramic strain sensor. As shown illustratively on figure 2B, the strain sensor 18S is integrated into the housing 11 of the sensor node 10, the strain sensor 18S being configured to generate a strain signal indicative a strain acting on the airfoils 100, 202 100 by capturing a strain acting on the attachment surface 14 of the sensor node 10.

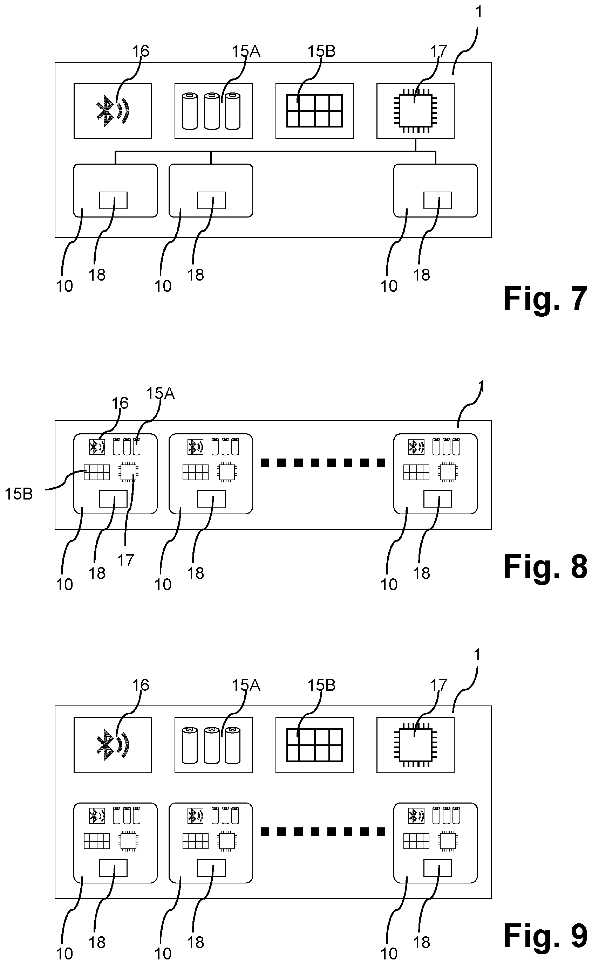

Turning now to figures 7 and 8, two specific embodiments of a sensor device 1 shall be described.

Figure 7 shows a highly schematic block diagram of a first embodiment of a sensor device 1 comprising a plurality of sensor nodes 10. In the embodiment shown on figure 7, the sensor nodes 10 share the same energy storage device 15A, energy capture device 15B, data transmitter 16 and on-board processing device 17. As illustrated by continuous lines, the sensor elements 18 of the plurality of sensor nodes 10 are connected with the on-board processing device 17 for processing the sensor signals generated therefrom. In this embodiment, same energy storage device 15A, energy capture device 15B, data transmitter 16 and on-board processing device 17 are not comprised by any one of the sensor nodes 10 but by the sensor device 1,.e.g. in separate housing.

Alternatively, as shown on Figure 8, each sensor node10 has its own energy storage device 15A, energy capture device 15B, data transmitter 16 and on-board processing device 17. Providing each sensor node10with its own energy storage device 15A, energy capture device 15B, data transmitter 16 and on-board processing device 17 enables the sensor nodes 10 to operate autonomously, all signal capturing, processing and transmission of the sensor signals (e.g. to a relay hub) being performed locally and individually by the respective sensor node 10.

Figure 9 shows a highly schematic block diagram of an even further embodiment of a sensor device 1, whereby the sensor device 1 as well as the one or more of the sensor nodes 10 comprise energy storage devices 15A, energy capture devices 15B, data transmitters 16 and on-board processing devices 17. In this embodiments, the sensor nodes 10 operate semi-autonomous, i.e. each sensor node 10 manages its own power reserves, controls the sensor elements 18, performs at least a pre-processing of the sensor signals captured by the sensor elements. However, in contrast to the fully autonomous operation of sensor nodes (as shown on figure 8), the semi-autonomous operation of sensor nodes 10 (embodiment shown on figure 9) relies on the sensor device 1 to orchestrate the operation of the sensor nodes 10 as well as for transmitting the sensor signals further to a relay hub.

It shall be recognized, that the choice of one of the sensor device topologies, i.e. centralized (as shown on figure 7), autonomous (as shown on figure 8) or semi-autonomous (as shown on figure 9), is dependent on the individual use case, whereby different embodiments of the sensor device 1 or sensor nodes 10 may be deployed even within one or more airfoils 100, 202 100 of the same system.

Particular embodiments of the computer-implemented method for monitoring of one or more airfoils 100, 202 shall be now described with reference to the flowcharts shown in the figures.

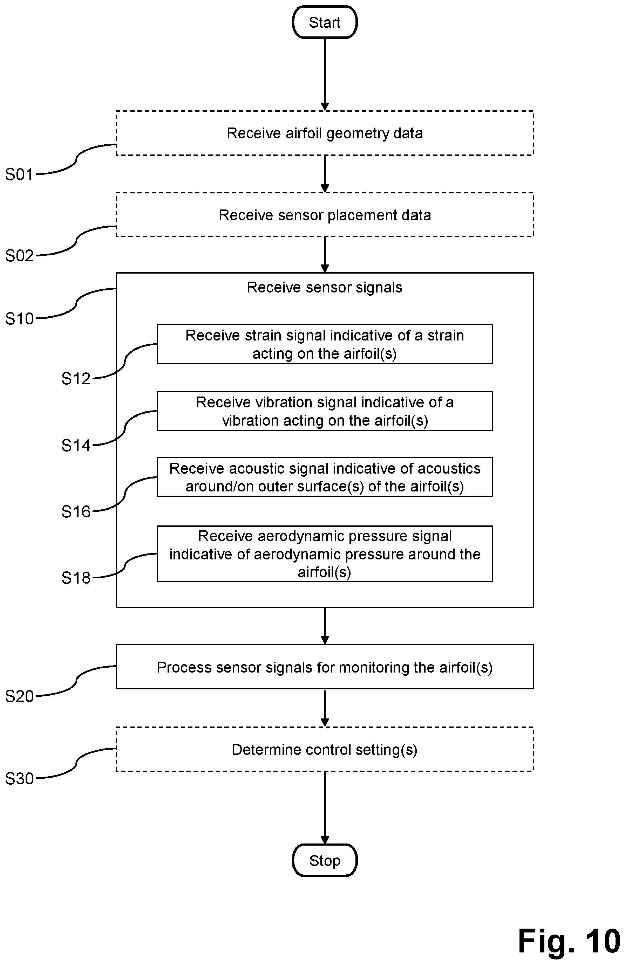

Figure 10 shows a flowchart illustrating steps of a computer-implemented method for monitoring of one or more airfoils 100, 202. In a first preparatory step **S01** (optional according to particular embodiments) airfoil geometry data indicative of a geometry of the one or more airfoils 100, 202 is received by the computing device 56, 70, comprising retrieval from a datastore internal and/or communicatively connected to the computing device 56, 70 as well as receipt of the airfoil geometry data via wired or wireless data communication. As its naming suggest, the airfoil geometry data indicates various absolute and/or relative dimensions of the airfoil, including but not limited to: a cross-section, surface area, width, etc. Furthermore, the airfoil geometry data comprises data descriptive of various parameters of the airfoil including but not limited to: chord C, leading edge LE and/or trailing edge TE geometry (e.g. curvature radius), thickness to chord ration, suction surface SS, pressure surface PS.

In a further preparatory step **S02** (optional according to particular embodiments) sensor placement data indicative of sensing locations of the one or more sensor nodes 10 relative to the geometry(s) of the one or more airfoils 100, 202 is received by the computing device 56, 70, comprising retrieval from a datastore internal and/or communicatively connected to the computing device 56, 70 as well as receipt via wired or wireless data communication.

In a first step **S10** of the method for monitoring of one or more airfoils 100, 202, sensor signals are received by the computing device 56, 70. As described already with respect to the figures depicting various embodiments of the sensor nodes, sensor device respectively system, the sensor signals are received by the computing device directly from the sensor elements or indirectly via wired or wireless transmissions.

In a substep **S12** of step S10, a strain signal is indicative of a strain acting on the one or more airfoils 100, 202 is received from a strain sensor 18S.

In a substep **S14** of step S10, a vibration signal indicative of a vibration within the one or more airfoils 100, 202 is received from an inertial measurement unit 18IMU.

In a substep **S16** of step S10, an acoustic signal indicative of acoustics around and/or on outer surface(s) of the one or more airfoils 100, 202 is received from a microphone array 18MA.

In a substep **S18** of step S10, an aerodynamic pressure signal indicative of an aerodynamic pressure around the one or more airfoils 100, 202 is received from a pressure sensor array 18PA.

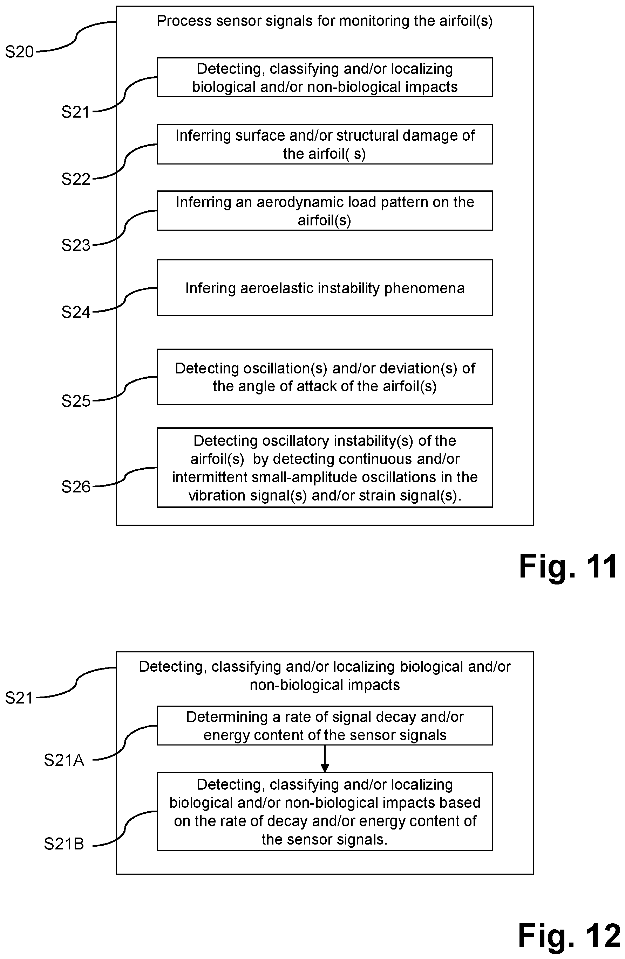

The sensor signals are processed, in a step S20, for monitoring of the one or more airfoils 100, 202. Specifics as to what processing of sensors signals respectively of what monitoring of the one or more airfoils 100, 202 entail shall be described with reference to figures 11 to 20.

In a step S30 (optional, according to embodiments), control setting(s) for operating one or more of wind turbines 200 is/are determined.

As illustrated on figure 11, processing the sensor signals for monitoring of the one or more airfoils 100, 202 comprises substep **S21** of detecting, classifying and/or localizing biological and/or non-biological impacts with the one or more airfoils 100, 202.

Alternatively, or additionally, processing the sensor signals for monitoring of the one or more airfoils 100, 202 comprises substep **S22** of inferring surface (e.g. surface erosion) and structural damage (e.g. crack) of the one or more airfoils 100, 202.

Alternatively, or additionally, processing the sensor signals for monitoring of the one or more airfoils 100, 202 comprises substep **S23** inferring an aerodynamic load pattern/distribution on the one or more airfoils 100, 202.

Alternatively, or additionally, processing the sensor signals for monitoring of the one or more airfoils 100, 202 comprises substep **S24** of inferring aeroelastic instability phenomena.

Alternatively, or additionally, processing the sensor signals for monitoring of the one or more airfoils 100, 202 comprises substep **S25** of detecting oscillation(s) and/or deviation(s) of the angle of attack of the one or more airfoils 100, 202.

Alternatively, or additionally, processing the sensor signals for monitoring of the one or more airfoils 100, 202 comprises substep **S26** of detecting oscillatory instability(s) of the one or more airfoils 100, 202 by detecting continuous and/or intermittent small-amplitude oscillations in the vibration signal(s) and/or strain signal(s).

Alternatively, or additionally, processing the sensor signals for monitoring of the one or more airfoils 100, comprises full characterization and identification of the rotor turbulent wind flow field.

Alternatively, or additionally, processing the sensor signals for monitoring of the one or more airfoils 100, comprises full characterization and identification of the blade/rotor operational modal properties (frequency, damping and mode shapes)

Alternatively, or additionally, processing the sensor signals for monitoring of the one or more airfoils 100, comprises full characterization of the 2D and 3D aerodynamic parameters

Alternatively, or additionally, processing the sensor signals for monitoring of the one or more airfoils 100, comprises full characterization of the 2D and 3D accoustic parameters

Figure 12 illustrates in detail classifying and/or localizing biological and/or non-biological impacts with the one or more airfoils 100, 202. The process is based on the observation that a collision of a biological (e.g. birds) or non-biological (e.g. hail, rain or lightning) will leave an impact response in the aerodynamic pressure, vibration, strain and acoustic signals being captured. Hence, Detecting, classifying and/or localizing biological and/or non-biological impacts with the one or more airfoils 100, 202 is performed by comparison of the strain signal, vibration signal, acoustic signal and/or aerodynamic pressure signal(s) with a set of signal patterns characteristic to biological respectively non-biological impacts and collisions with the one or more airfoils 100, 202, the set of signal patterns characteristic to biological respectively non-biological impacts and collisions are recorded, labelled and stored in a database in a learning/training process.

In a first sub-substep **S21A**, a rate of signal decay and/or energy content of the sensor signals is determined. In particular, determining a rate of signal decay and/or energy content of the sensor signals is achieved by characterizing the strain signal, vibration signal, acoustic signal and/or aerodynamic pressure signal in the time and/or frequency domains.

Having determined a rate of signal decay and/or energy content of the sensor signals, in a further sub-substep S21B, biological and/or non-biological impacts are detected, classified and/or localized based on the rate of decay and/or energy content of the sensor signals.

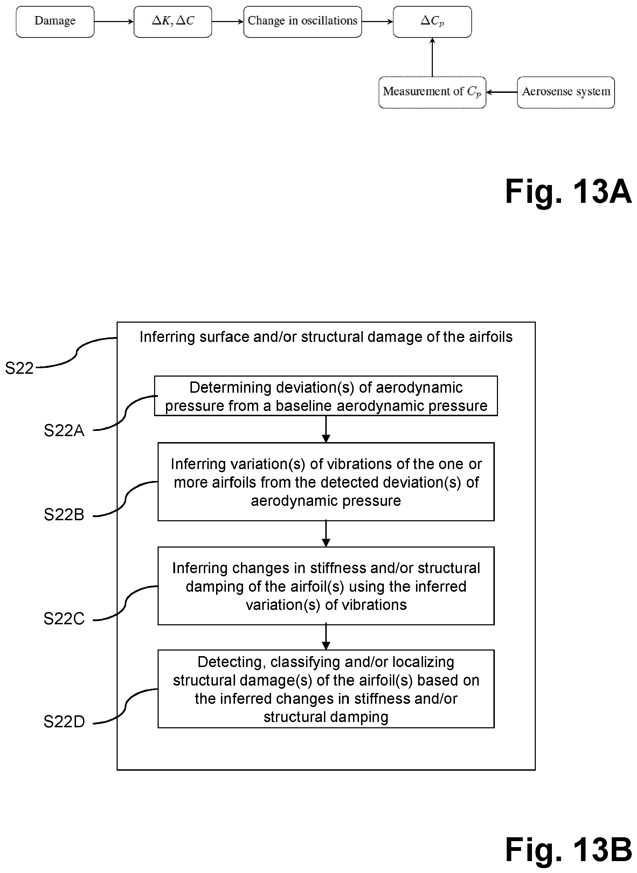

Figure 13A shows the theoretical basis for the concept of inferring surface and/or structural damage of airfoils from changes in the aerodynamic pressure. As part of the present invention, it has been recognized that structural damage on an airfoil (e.g. a crack) changes the stiffness ΔK and/or the structural damping ΔC of the airfoil. These changes ΔK, ΔC will lead to altered vibrations of the airfoil. Since the aerodynamic pressure distribution depends on the fluid-structure interaction of the airfoil with the surrounding wind flow, the aerodynamic pressure ΔCₚ will be affected by a change in vibrations. Hence, changes in the fused aerodynamic pressure ΔCₚ and vibration features may be used for damage detection.

Figure 13B illustrates in detail steps of inferring surface and/or structural damage of the airfoils 100. In a first sub-substep **S22A**, deviation(s) of aerodynamic pressure (ΔCₚ) - within the aerodynamic pressure signal - from a baseline aerodynamic pressure are detected. For example, a baseline aerodynamic pressure is recorded over a period of time (e.g. a year to capture seasonal variations). The received current aerodynamic pressure (ΔCₚ) - within the aerodynamic pressure signal - is then compared with the prerecorded baseline aerodynamic pressure and determined whether the deviation matches a normal, expected deviation (such a gradual, slow and periodic deviation due to environmental and operational changes) or whether the deviation is not expected (such as a sudden, fast deviation uncharacteristic of a change in environmental or operational conditions, i.e. indicative of an impact).

Thereafter, in a further sub-substep **S22B**, variation(s) of vibrations of the one or more airfoils 100, 202 are inferred from the detected deviation(s) of aerodynamic pressure (ΔCₚ).

Thereafter, in a sub-substep **S22C**, using the inferred variation(s) of vibrations, changes in stiffness (ΔK) and/or structural damping (ΔC) of the one or more airfoils 100, 202 is/are inferred.

Finally, in a next sub-substep **S22D**, structural damage(s) of the one or more airfoils 100, 202 are detected, classified and/or localized based on the inferred changes in stiffness (ΔK) and/or structural damping (ΔC) of the one or more airfoils 100, 202.

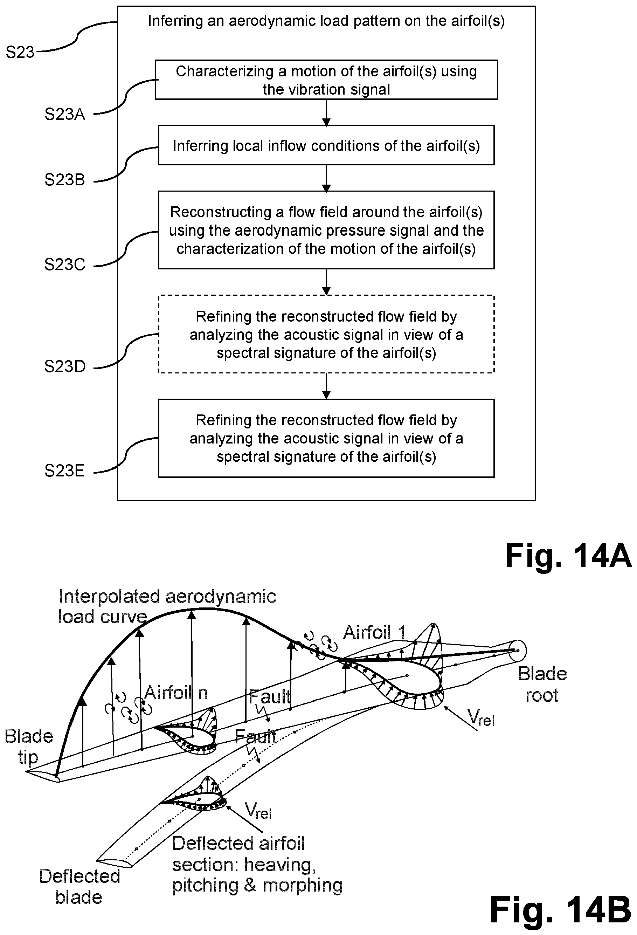

Turning now to figure 14A, the process of inferring an aerodynamic load pattern/distribution on the one or more airfoils 100, 202 shall be described. In a first sub-substep **S23A**, a motion (position, orientation, deflection, deformation) of the one or more airfoils 100, 202 is characterized using the vibration signal, i.e. using the airfoil kinematics in space.

Thereafter, in a sub-substep **S23B**, local inflow conditions such as local angle of attack, relative wind speed & local inflow turbulence of the one or more airfoils 100, 202 are inferred using a physics-informed machine learning method of the potential flow theory with conform predictions for uncertainty quantification.

As a next step **S23C**, a flow field around the one or more airfoils 100, 202 is reconstructed using the aerodynamic pressure signal and the characterization of the motion (position, orientation, deflection, deformation) of the one or more airfoils 100, 202. For example, the aerodynamic pressure data measured on the surface of the airfoil is propagated using a graph- or mesh-based numerical model (e.g. a Graph Neural Network model) to estimate the flow field around the airfoil geometry.

Optionally, according to embodiments, in a sub-substep **S23D**, the reconstructed flow field is refined by analyzing the acoustic signal in view of a spectral signature of the one or more airfoils 100, 202. Specifically, for a given airfoil geometry, wind speed, angle of attack and airfoil position, the acoustic signal has a very specific spectral signature that can be used to adjust, correct, fine tune and calibrate the reconstructed flow field from the previous step.

Finally, in sub-substep **S23E**, the aerodynamic load pattern/distribution on the one or more airfoils 100, 202 is inferred using the reconstructed flow field around the one or more airfoils 100, 202 and/or inferred local inflow field conditions.

Figure 14B illustrates the theoretical basis for inferring an aerodynamic load pattern/distribution on an airfoil 100.The figure depicts an airfoil 100 in a state of non-deformation and the same airfoil 100 in a deflected state under the effect of aerodynamic load. The highlighted airfoil sections also depict the aerodynamic pressure distribution around them. The aerodynamic pressure signals measured by the one or more sensor nodes 100 at respective sensing locations along the airfoil 100 can be converted into respective sectional "discrete" aerodynamic forces. The computing device 56, 70 is configured to interpolate between the "discrete" aerodynamic forces to infer a total load distribution/curve.

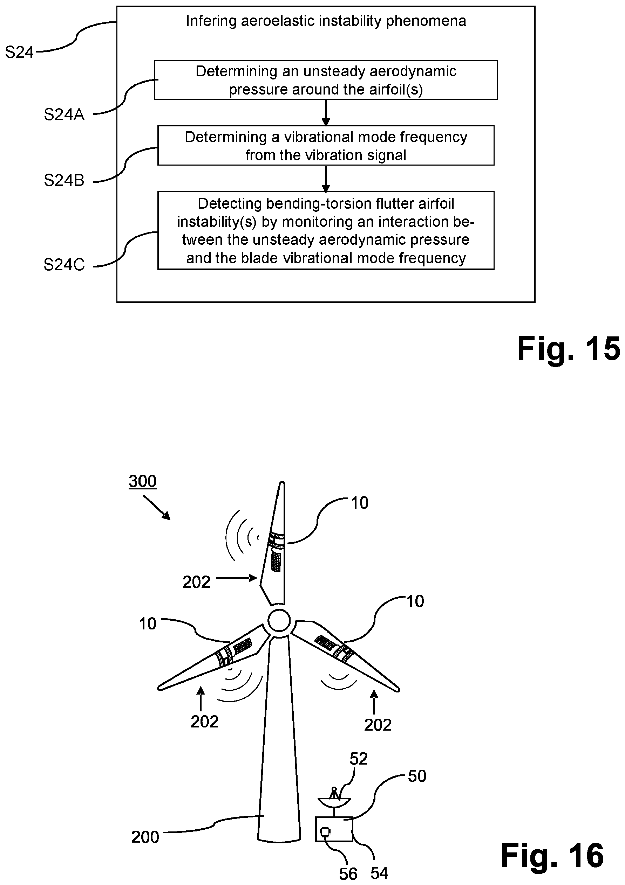

Figure 15 depicts a flowchart illustrating steps of infering aeroelastic instability phenomena. In a first sub-substep S24A, unsteady aerodynamic pressure around the airfoil 100, 202 is determined using the aerodynamic pressure signal. In sub-substep S24B, a vibrational modal properties (frequency, damping and mode shapes) are determined from the vibration signal. Thereafter, in sub-substep S24C, bending-torsion flutter airfoil instability(s) is detected by monitoring of an interaction between the unsteady aerodynamic pressure and the blade vibrational mode frequency.

Turning now to figure 16, hereby described is a system 300 for monitoring of one or more airfoils 100 comprised by wind turbine blades 202 of a wind turbine 200, the wind turbine blades 202 rotating around a respective wind turbine axis. A sensor device 1 is associated with the wind turbine 200. It shall be noted that figure 16 does not bear the reference numeral "1" for the sensors device 1 since figure 16 illustrates an embodiment whereby the sensor devices 10 operate autonomously, the features of the sensor device 1 being distributed amongst the sensor nodes 10.

The system 300 further comprises a computing device 56, 70 communicatively connected to the sensor device(s) 1, the computing device 56, 70 being configured to carry out the method for monitoring of one or more airfoils 100, 202 according to one of the embodiments disclosed herein. In a first embodiment, the computing device comprises a hub computing device 56 comprised by a relay hub 50, the relay hub 50 comprising a hub data receiver 52 for receiving the sensor signals from the plurality of sensor nodes 10 attached to the wind turbine blades 202.

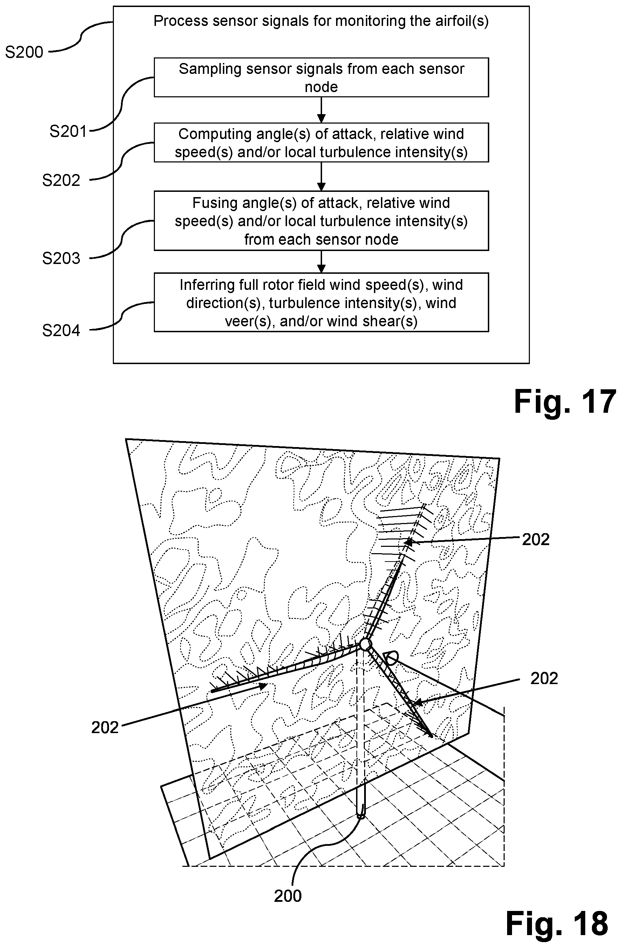

Figure 17 illustrates substeps of the step **S200** of processing the sensor signals for monitoring of a plurality of wind turbine blades 202 of a wind turbine 200. In a fist substep **S201**, the sensor signals from each sensor node 10 are sampled, at a sampling rate, to determine sectional aerodynamic pressure distributions, sectional acoustic and sectional vibrational data corresponding to different azimuthal positions of the wind turbine blade(s). Thereafter, in a substep **S202** one or more angle(s) of attack, relative wind speed(s) and/or local turbulence intensity(s) are computed at a predefined number of azimuthal positions of the wind turbine blades 202 from the sectional aerodynamic pressure distributions, sectional acoustic and sectional vibrational data. In a substep **S203** the angles of attack, relative wind speeds and/or local turbulence intensities from each sensor node 10 are fused for one or more rotations of the wind turbine blades 202. Finally, in substep **S204** full rotor field wind speeds, wind directions, turbulence intensities, wind veers, and/or wind shears acting on the wind turbine 200 are inferred based on the fused angle(s) of attack, relative wind speed(s) and/or local turbulence intensity(s) across the wind turbine blades 202.

Figure 18 shows visually the reconstruction of full rotor field wind speeds, wind directions, turbulence intensities, wind veers, and/or wind shears acting on the wind turbine 200 are based on the fused angle(s) of attack, relative wind speed(s) and/or local turbulence intensity(s) across the wind turbine blades 202 of a wind turbine 200.

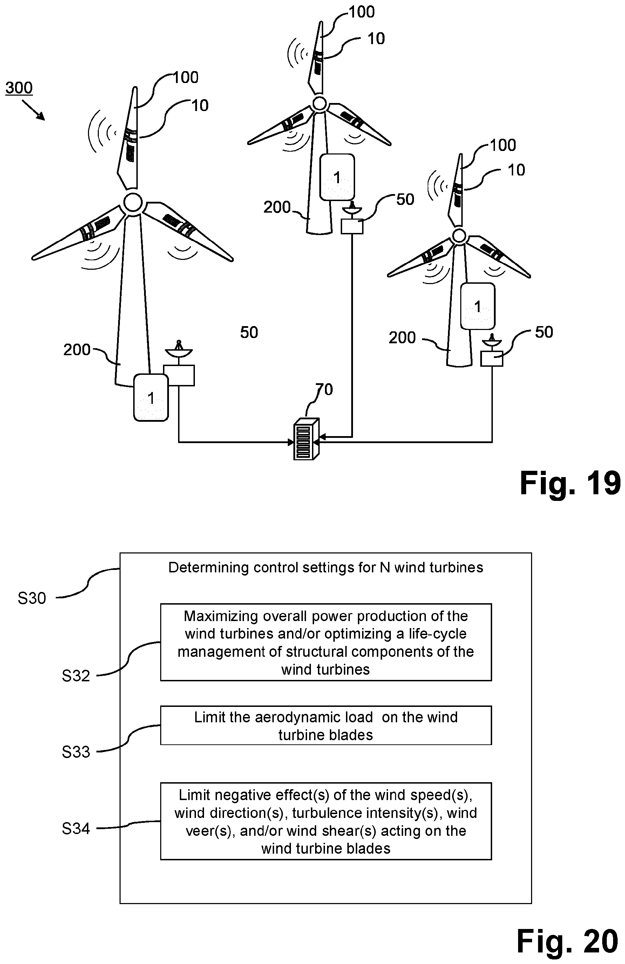

As shown on figure 19, the system 300 for monitoring of airfoils 100, 202 is deployable for monitoring of wind turbine blades 202 of a number N (greater than or equal to 2) of wind turbines 200 of a wind farm, a number M of sensor devices 1 being associated with the number N of wind turbines 200. The number M of sensor devices 1 are communicatively connected with a remote computing device 70 such as a cloud-based server, hub transmitters 56 of the respective relay hubs 50 forwarding the sensor signals to the remote computing device 70. It shall be noted that not necessarily all sensor devices 1 and not all sensor nodes 10 must be identical and comprise all types sensor elements 18. It can be envisaged that according to embodiments, the different types of sensor elements 18 are distributed across the sensor nodes 10 of each sensor device 1 such as to ensure all sensor signals are captured by each sensor device 1 altogether. Furthermore it can be envisaged, that not necessarily all turbine blades 202 of all wind turbines 200 must be provided with a sensor node 10. Instead, the sensor nodes 10 may be distributed such that all sensor signals are captured for each wind turbine 200.

Corresponding to the system 300 for monitoring of a plurality of wind turbine blades of a wind farm, step S10 of receiving the sensor signals comprises receiving the sensor signals from a number MN of sensor devices 1 associated with a number N of wind turbines 200, a number M equal to or greater than N of sensor nodes 10 - of the N sensor devices 1 - being attached to one or more airfoils 100, 202 sections comprised by a number K of wind turbine blades of the N wind turbines 200, the wind turbine blades rotating around wind turbine axes. Correspondingly, step S204 of inferring a full field wind speed, wind direction, turbulence intensity, wind veer, and/or wind shear comprises inferring a number N of full field wind speeds, wind directions, turbulence intensities, wind veers, and/or wind shears for each of the number N of wind turbines 200.

Furthermore, the step S30 comprises determining control setting(s) for operating the number N of wind turbines 200 - such as pitch control/rotor speed control/torque control/power control/yaw control and/or wake steering- based on the number N of full field wind speeds, wind directions, turbulence intensities, wind veers, and/or wind shears such as to collectively optimize operation of the number N of wind turbines 200.

As shown on figure 20, determining control setting(s) for operating one or more of the number N of wind turbines 200 comprises step **S32** of determining control setting(s) for maximizing an overall power production of the number N of wind turbines 200, and/or optimizing a life-cycle management of structural components of the number N of wind turbines 200.

Alternatively, or additionally, determining control setting(s) for operating one or more of the number N of wind turbines 200 comprises step **S33** of determining control setting(s) such as to limit the aerodynamic load on the wind turbine blades 202, or to derate the turbine operation because of electrical grid requirements or reduced noise requirements or sector management requirements.

Alternatively, or additionally, determining control setting(s) for operating one or more of the number N of wind turbines 200 comprises the step **S34** of determining control setting(s) for operating one or more of the number N of wind turbines 200 such as to limit negative effect(s) of the wind speed(s), wind direction(s), turbulence intensity(s), wind veer(s), and/or wind shear(s) acting on one or more of the wind turbine blades 202.

It should be noted that, in the description, the sequence of the steps has been presented in a specific order, one skilled in the art will understand, however, that the order of at least some of the steps could be altered, without deviating from the scope of the disclosure.

### REFERENCE LIST

| | | | |
|---|---|---|---|
| sensor device | | | 1 |
| sensor nodes | | | 10 |
| Housing | | | 11 |
| | airfoil attachment surface | | 12 |
| | exposed surface | | 14 |
| energy storage device | | | 15A |
| energy capture device | | | 15B |
| data transmitter | | | 16 |
| on-board processing device | | | 17 |
| sensor elements | | | 18 |
| | inertial measurement unit | | 18IMU |
| | microphone array | | 18MA |
| | microphones (of microphone array) | | 18Ms |
| | pressure sensor array | | 18PA |
| | absolute pressure sensors | | 18Pabs |
| | differential pressure sensors | | 18Pdif |
| | | reference opening | 19ref |
| | | measurement opening | 19mes |
| | | fluid connections | 19fl |
| | strain sensor | | 18S |
| relay hub | | | 50 |
| | hub data receiver (of relay hub) | | 52 |
| | hub data transmitter (of relay hub) | | 54 |
| | hub computing device | | 56 |
| remote computing device | | | 70 |
| airfoil | | | 100 |
| | Chord | | C |
| | Leading Edge | | LE |
| | Trailing Edge | | TE |
| | Suction Surface | | SS |
| | Pressure Surface | | PS |
| flow Separation | | | FS |
| angle of Attack | | | AoA |
| number of wind turbines | | | N |
| number of blades per turbine | | | L |
| number of sensor nodes per sensor device | | | J |
| wind turbine | | | 200 |
| | wind turbine blades | | 202 |
| system | | | 300 |

## Claims

1. A computer implemented method for monitoring one or more airfoils (100, 202), comprising:
- receiving, by a computing device (56, 70), sensor signals from one or more sensor devices (1) comprising one or more sensor nodes (10) arranged on the one or more airfoils (100, 202), the sensor signals comprising:
- a strain signal indicative of a strain acting on the one or more airfoils (100, 202);
- a vibration signal indicative of a vibration within the one or more airfoils (100, 202);
- an acoustic signal indicative of acoustics around and/or on outer surface(s) of the one or more airfoils (100, 202);
- an aerodynamic pressure signal indicative of an aerodynamic pressure around the one or more airfoils (100, 202);
- processing, by the computing device (56, 70), the sensor signals for monitoring the one or more airfoils (100, 202).

2. The method according to claim 1, wherein processing the sensor signals for monitoring the one or more airfoils (100, 202) comprises detecting, classifying and/or localizing biological and/or non-biological impacts with the one or more airfoils (100, 202) by comparison of the strain signal, vibration signal, acoustic signal and/or aerodynamic pressure signal and/or a fusion thereof with a set of signal patterns characteristic to biological respectively non-biological impacts and collisions with the one or more airfoils (100, 202).

3. The method according to claim 2, wherein detecting, classifying and/or localizing biological and/or non-biological impacts with the one or more airfoils (100, 202) comprises:
- determining a rate of signal decay and/or energy content of the sensor signals by characterizing the strain signal, vibration signal, acoustic signal and/or aerodynamic pressure signal in the time and/or frequency domains;
- detecting, classifying and/or localizing biological and/or non-biological impacts based on the rate of decay and/or energy content of the sensor signals.

4. The method according to one of the claims 1 to 3, wherein processing the sensor signals for monitoring the one or more airfoils (100, 202) comprises inferring surface and/or structural damage of the one or more airfoils (100, 202) from the sensor signals

5. The method according to claim 4, wherein inferring surface and/or structural damage of the one or more airfoils (100, 202) comprises:
- detecting deviation(s) of aerodynamic pressure (ΔCₚ) - within the aerodynamic pressure signal - from a baseline aerodynamic pressure;
- inferring variation(s) of vibrations of the one or more airfoils (100, 202) from the detected deviation(s) of aerodynamic pressure (ΔCₚ);
- inferring changes in stiffness (ΔK) and/or structural damping (ΔC) of the one or more airfoils (100, 202) using the inferred variation(s) of vibrations;
- detecting, classifying and/or localizing structural damage(s) of the one or more airfoils (100, 202) based on the inferred changes in stiffness (ΔK) and/or structural damping (ΔC) of the one or more airfoils (100, 202).

6. The method according to one of the claims 1 to 5, wherein processing the sensor signals for monitoring of the one or more airfoils (100, 202) comprises inferring an aerodynamic load pattern/distribution on the one or more airfoils (100, 202) by:
- characterizing a motion (position, orientation, deflection, deformation) of the one or more airfoils (100, 202) using the vibration signal;
- inferring local inflow conditions such as local angle of attack, relative wind speed & local inflow turbulence of the one or more airfoils (100, 202) using a physics-informed machine learning method of the potential flow theory with conform predictions for uncertainty quantification.;
- reconstructing a flow field around the one or more airfoils (100, 202) using the aerodynamic pressure signal and the characterization of the motion (position, orientation, deflection, deformation) of the one or more airfoils (100, 202);
- inferring the aerodynamic load pattern/distribution on the one or more airfoils (100, 202) using the reconstructed flow field around the one or more airfoils (100, 202) and/or inferred local inflow field conditions.

7. The method according to claim 6, wherein inferring the aerodynamic load pattern/distribution on the one or more airfoils (100, 202) further comprises refining the reconstructed flow field by analyzing the acoustic signal in view of a spectral signature of the one or more airfoils (100, 202).

8. The method according to one of the claims 1 to 7, wherein the one or more airfoils (202) is/are comprised by one or more of a plurality of wind turbine blades (202) of one or more wind turbines (200), the plurality of wind turbine blades (202) rotating around respective wind turbine axis(s) of the one or more wind turbines (200), and wherein processing the sensor signals for monitoring of the one or more airfoils (100, 202) further comprises:
- sampling, at a sampling rate, the sensor signals from each sensor node (10) to determine sectional aerodynamic pressure distributions, sectional acoustic and sectional vibrational data corresponding to different azimuthal positions of the wind turbine blades (202); and
- computing, at a predefined number of azimuthal positions of the wind turbine blades (202), one or more angle(s) of attack, relative wind speed(s) and/or local turbulence intensity(s) from the sectional aerodynamic pressure distributions, sectional acoustic and sectional vibrational data.

9. The method according to claim 8, wherein processing the sensor signals for monitoring of the one or more airfoils (202) further comprises further comprises:
- fusing the angle(s) of attack, relative wind speed(s) and/or local turbulence intensity(s) from each sensor node (10) for one or more rotations of the wind turbine blades (202);
- inferring full rotor field wind speed(s), wind direction(s), turbulence intensity(s), wind veer(s), and/or wind shear(s) acting on the one or more wind turbines (200) based on the fused angle(s) of attack, relative wind speed(s) and/or local turbulence intensity(s) across the wind turbine blades (202).

10. The method according to claim 9, whereby:
- receiving the sensor signals comprises receiving the sensor signals from a number M of sensor devices (1) associated with a number N of wind turbines (200), a number M equal to or greater than N of sensor nodes (10) - of the N sensor devices (1) - being attached to one or more airfoils (100, 202) comprised by a number K of wind turbine blades (202) of the N wind turbines (200), the wind turbine blades (202) rotating around wind turbine axes;
- inferring a full field wind speed, wind direction, turbulence intensity, wind veer, and/or wind shear comprises inferring a number N of full field wind speeds, wind directions, turbulence intensities, wind veers, and/or wind shears for each of the number N of wind turbines (200);
- numbers N, M and K being positive integers greater than or equal to 2, the method further comprising:
- determining control setting(s) for operating one or more of the number N of wind turbines (200) based on the number N of full field wind speeds, wind directions, turbulence intensities, wind veers, and/or wind shears such as to optimize operation of the number N of wind turbines (200), in particular for maximizing an overall power production of the number N of wind turbines (200), and/or optimizing a life-cycle management of structural components of the number N of wind turbines (200).

11. The method according to claim 10, further comprising one or more of:
- determining control setting(s) for operating one or more of the number N of wind turbines (200) such as to limit the aerodynamic load on one or more of the wind turbine blades (202); and/or
- determining control setting(s) for operating one or more of the number N of wind turbines (200) such as to limit negative effect(s) of the wind speed(s), wind direction(s), turbulence intensity(s), wind veer(s), and/or wind shear(s) acting on one or more of the wind turbine blades (202).

12. The method according to one of the claims 1 to 11, wherein processing the sensor signals for monitoring of the one or more airfoils (100, 202) comprises:
- determining unsteady aerodynamic pressure around the airfoil (100, 202) using the aerodynamic pressure signal;
- determining a vibrational modal properties (frequency, damping and mode shapes) is are from the vibration signal; and
- detecting bending-torsion flutter airfoil instability(s) by monitoring of an interaction between the unsteady aerodynamic pressure and the blade vibrational mode frequency.

13. The method according to one of the claims 6 to 12, wherein processing the sensor signals for monitoring of the one or more airfoils (100, 202) comprises one or more of:
- detecting oscillation(s) and/or deviation(s) of the angle of attack of the one or more airfoils (100, 202);
- detecting oscillatory instability(s) of the one or more airfoils (100, 202) by detecting continuous and/or intermittent small-amplitude oscillations in the vibration signal(s) and/or strain signal(s).

14. The method according to one of the 1 to 13, further comprising:
- receiving airfoil geometry data indicative of a geometry of the one or more airfoils (100, 202); and
- receiving sensor placement data indicative of sensing locations of the one or more sensor nodes (10) relative to the geometry(s) of the one or more airfoils (100, 202),
whereby processing of the sensor signals for monitoring the one or more airfoils (100, 202) further comprises processing of the sensor signals using the airfoil geometry data and sensor placement data.

15. A computer program product comprising computer-readable instructions which, when executed by a processor of a computing device (56, 70), cause the computing device (56, 70) to carry out the method according to any one of the claims 1 to 14.

16. A sensor device (1) comprising:
- one or more sensor nodes (10) for attachment to one or more airfoils (100, 202), the one or more sensor nodes comprising a housing (11) having an airfoil attachment surface (12) and an exposed surface (14), and an energy storage device (15A) and/or energy capture device (15B);
- a plurality of sensor elements (18) comprised by the one or more sensor nodes (10), the plurality of sensor elements (18) comprising:
- a strain sensor (18S) configured to generate a strain signal indicative a strain acting on the one or more airfoils (100, 202) by capturing a strain acting on the attachment surface;
- an inertial measurement unit (18IMU) configured to generate a vibration signal indicative of a vibration within the one or more airfoils (100, 202) by capturing vibrations acting on the airfoil attachment surface (12);
- a microphone array (18MA) comprising a plurality of microphones (18Ms) arranged at a plurality of microphone locations spaced apart on the exposed surface (14) of the housing (11), configured to generate an acoustic signal indicative of acoustics around and/or on outer surface(s) of the one or more airfoils (100, 202), the acoustic signal comprising a plurality of audio and/or surface wave signals corresponding to the plurality of microphone locations; and
- a pressure sensor array (18PA) comprising a plurality of absolute pressure sensors (18Pdif) and/or differential pressure sensors (18Pdif), configured to generate an aerodynamic pressure signal indicative of an aerodynamic pressure around the one or more airfoils (100, 202), the aerodynamic pressure signal comprising a plurality of pressure signals indicative of pressures at a plurality of pressure measurement locations arranged spaced apart on the exposed surface (14) of the support;
- one or more data transmitters (16); and
- one or more on-board processing devices (17) configured to capture and manage the sensor signals generated by the sensor elements (18) and to control one or more of the data transmitters (16) to transmit the sensor signals.

17. The sensor device (1) according to claim 16, wherein
- one or more of the data transmitters (16), one or more of the on-board processing device(s) (17), and one or more of the energy supply of the energy storage devices (15A) and/or energy capture devices (15B) are comprised by the one or more sensor nodes (10);
- the one or more on-board processing devices (17) of the one or more sensor nodes (10) are configured to orchestrate operation of the plurality of sensor elements (18) comprised by the one or more sensor nodes (10) based on one or more of:
- an energy supply of the energy storage device (15A) and/or energy capture device (15B) of each sensor node (10);
- operating state(s) of the one or more airfoils (100, 202) to which the sensor nodes (10) are attached to;
- actual or forecasted environmental state in the vicinity of the one or more airfoils (100, 202);
- the sensor signals generated by the plurality of sensor elements (18) comprised by the one or more sensor nodes (10).

18. The sensor device (1) according to claim 16 or 17, further comprising a relay hub (50) comprising:
- a hub data receiver (52), configured to receive the sensor signals from the data transmitters (16) of the one or more of the sensor nodes (10);
- a hub data transmitter (54) configured to transmit data representative of at least part of the sensor signals received from the sensor nodes (10).

19. The sensor device (1) according to claim 18, wherein the relay hub (50) comprises a hub computing device (56) for processing the received sensor signals before data representative of at least part of the sensor signals being transmitted by the hub data transmitter (54).

20. A system (300) for monitoring one or more airfoils (100, 202) of one or more wind turbines (200), the system (300) comprising:
- one or more sensor devices (1) according to one of the claims 16 to 19, each of the one or more sensor devices (1) being associated with one or more wind turbines (200);
- a computing device (56, 70), in particular a remote computing device (70), communicatively connected to the one or more sensor devices (1), the computing device being configured to carry out the method for monitoring one or more airfoils (100, 202) according to one of the claims 1 to 14.

21. A sensor node for integration into an airfoil (100, 202), the sensor node comprising:
- a plurality of sensor elements (18) comprising:
- a strain sensor (18S) configured to generate a strain signal indicative a strain acting on the strain sensor (18S);
- an inertial measurement unit (18IMU) configured to generate a vibration signal indicative of a vibration within the sensor node;
- a microphone array (18MA) comprising a plurality of microphones (18Ms), configured to generate an acoustic signal indicative of acoustics around the plurality of microphones (18Ms), the acoustic signal comprising a plurality of audio signals generated by the plurality of the microphones (18Ms); and
- a pressure sensor array (18PA) comprising a plurality of absolute pressure sensors (18Pdif) and/or differential pressure sensors (18Pdif) configured to generate an aerodynamic pressure signal comprising a plurality of pressure signals indicative of aerodynamic pressures around the plurality of absolute pressure sensors (18Pdif) and/or differential pressure sensors (18Pdif),
- an energy storage device (15A) and/or energy capture device (15B);
- a data transmitter (16); and
- an on-board processing device (17) configured to capture and manage the sensor signals generated by the sensor elements (18) and to control one or more of the data transmitters (16) to transmit the sensor signals

22. An airfoil (100, 202) comprising a sensor node according to claim 21, the sensor node being integrated into the airfoil (100, 202) such that:
- the strain sensor (18S) is mechanically coupled with the airfoil (100, 202) to capture a strain acting on the one or more airfoils (100, 202);
- the inertial measurement unit (18IMU) is mechanically coupled with the airfoil (100, 202) to capture a vibrations acting on the one or more airfoils (100, 202);
- the plurality of microphones (18Ms) of the microphone array (18MA) are arranged at a plurality of microphone locations spaced apart on an exposed surface (14) of the airfoil (100, 202); and
- the pressure sensors of the pressure sensor array (18PA) are fluidically connected to a reference opening (19ref) and a plurality of measurement opening (19mes)s spaced apart on the exposed surface (14) of the airfoil (100, 202).
